# EUROPEAN PATENT APPLICATION

(11) **EP 4 756 047 A1**
(43) Date of publication of application: **10.06.2026**
(21) Application number: 24849085.6
(22) Date of filing: 26.07.2024
(51) Int. Cl.: C22B 23/02, C22B 1/02, C22B 1/24, C22B 5/12

(54) **METHOD FOR SMELTING NICKEL-CONTAINING OXIDE ORE**

(30) Priority: 28.07.2023 JP 2023123674; 28.07.2023 JP 2023123675
(71) Applicant: SUMITOMO METAL MINING CO., LTD., Tokyo 105-8716 (JP)
(72) Inventor: YAMASHITA Yu, Niihama-shi, Ehime 792-0002 (JP)
(74) Representative: Hirons, Daniel Stuart
(86) International application number: PCT/JP2024/026774
(87) International publication number: WO 2025/028432

(57) **Abstract**

Provided is a method for smelting a nickel-containing oxide ore with which the amount of CO2 generated is reduced and the nickel recovery rate is high.

The present invention is a method for smelting a nickel-containing oxide ore, the method comprising: a step for using a tubular reaction vessel, introducing a raw material that contains a nickel-containing oxide ore so as to move from above to below within the reaction vessel, and supplying a hydrogen-containing gas as a reducing agent to the raw material from below and from the side to perform a reduction treatment; a step for performing a melting treatment on the reduction product obtained using the reduction treatment; and a step for separating the slag from the melt obtained using the melting treatment and recovering a nickel-containing metal. The gas supplied from below to the raw material is supplied at room temperature.

The gas supplied from the side to the raw material is at a temperature of 300C or higher and is supplied from the side at a position above the position where the raw material for which the reduction treatment has been completed is stored.

## Description

### TECHNICAL FIELD

The present invention relates to a method for smelting an oxide ore containing nickel (nickel-containing oxide ore).

### BACKGROUND ART

In order to solve the climate change problem, the Paris Agreement was adopted in COP21 in 2015, which led each country to take the greatest effort to keep the worlds average temperature below plus 2C compared to the worlds average temperature before the industrial revolution.

In 2021, International Panel on Climate Change (IPCC) explicitly says in the 6threport, There is no doubt that human influence has warmed the atmosphere, ocean and land and thereafter the agreement to make a decision to derive efforts to keep the worlds average temperature increase to plus 1.5C compared to the worlds average temperature before industrial revolution was made in COP26.

Among such international movements, the Japanese government has set up a target of 26% reduction in greenhouse gas emission by 2030 and 80% reduction by 2050 as a ratio compared to 1990 in 2016, and has newly set up a target of substantially zero emission by 2050 in 2020, and 46% reduction by 2030 as a ratio compared to 2013 in 2021, and the movement of the greenhouse gas emission reduction is also accelerating in Japan.

In non-iron smelting industry, a reduction in emissions in accordance with target values and a conversion to a carbon neutral process in 2050 have also been demanded, and new processes with low energy and low fossil fuel usage have been developed.

For example, in ferronickel smelting industry, an Elchem method is currently the mainstream.

The Elchem method is a process in which a saprolite ore containing nickel oxide is pre-dried by a rotary kiln dryer, and even crystal water is dehydrated by gradually raising the temperature in the rotary kiln, and iron present in a trivalent form in the ore is reduced to divalent, and then almost the whole amount of nickel and some of iron are reduced to metal in an electric furnace to obtain an alloy.

However, in the Elchem method, a burner of fossil fuel such as pulverized coal or heavy oil is used in a step of predrying with a dryer and a step of reducing in a rotary kiln, and coal is used as a reducing agent and a heat source, so that a large amount of CO2 is generated.

Note that the CO2 generation amount is shown as about 22.4 t CO2/t Ni.

Reduction by hydrogen is considered as a measure for reducing the amount of CO2 generated.

It is known that nickel oxide alone is easily reduced to metal by hydrogen.

However, in hydrogen reduction of nickel in a nickel-containing oxide ore such as saprolite or limonite, a reduction degree is about 10% to 70%, which is significantly lower than 95% or more of the Elchem method.

This is because nickel is widely dispersed in an olivine phase ((Mg,Fe)2SiO4) and/or a magnesiowustite phase ((Mg,Fe)O) and its activity is low.

Therefore, a simple reduction with hydrogen alone results in a low nickel recovery ratio, and the Elchem method is industrially unfeasible.

As a measure for improving the nickel recovery ratio during the hydrogen reduction, a sodium compound addition method has been proposed.

However, there is a problem that an addition amount of the compound is enormous and chemical cost is too high to be industrially feasible.

Patent Document 1 discloses a method for producing reduced iron by reducing iron oxide charged into a shaft furnace.

Specifically, a method of reducing iron oxide by blowing a heated mixed gas containing a reducing gas containing 90% by volume or more of hydrogen gas and nitrogen gas into a shaft furnace is shown.

However, as mentioned above, in the hydrogen reduction of nickel, the reduction degree is about 10% to 70%, which is significantly lower than 95% or more of the Elchem method as a conventional method.

It is difficult to apply the hydrogen reduction method to the reduction in the CO2 generation amount in smelting of a nickel-containing oxide ore, and there is a need to develop a method in which the nickel recovery ratio is high even when the hydrogen reduction method is applied and the cost is industrially suitable.

### Citation List

### Patent Documents

Patent Document 1: PCT International Publication No. WO2021/230307

### DISCLOSURE OF THE INVENTION

### Problems to be Solved by the Invention

The present invention has been proposed in view of such circumstances, and an object of the present invention is to provide a method for smelting a nickel-containing oxide ore having a reduced CO2 generation amount and a high nickel recovery ratio. Means for Solving the Problems

The present inventor has intensively studied to solve the above-mentioned problems. As a result, the present inventor has found that by using a tubular reaction vessel, charging a raw material which contains a nickel-containing oxide ore such that the raw material moves from top to bottom, and supplying a gas containing hydrogen as a reducing agent to the raw material from below and from lateral side at a predetermined gas temperature to perform a reduction treatment, and then subjecting the resulting reduced product to a melting treatment, it is possible to improve the reduction ratio of nickel and recover nickel at a high recovery ratio, leading to the completion of the present invention.
(1) A first aspect of the present invention relates to a method for smelting a nickel-containing oxide ore, the method including: using a tubular reaction vessel, charging a raw material which contains the nickel-containing oxide ore into the reaction vessel such that the raw material moves from top to bottom, and supplying a gas containing hydrogen as a reducing agent to the raw material from below and from lateral side to perform a reduction treatment; subjecting a reduced product obtained by the reduction treatment to a melting treatment; and separating a slag from a molten product obtained by the melting treatment and recovering a metal which contains nickel, wherein the gas supplied to the raw material from below is supplied at room temperature, and the gas supplied to the raw material from the lateral side has a temperature of 300C or higher and is supplied from the lateral side at a position above the position where the raw material that has completed the reduction treatment is stored.
(2) A second aspect of the present invention relates to the method for smelting a nickel-containing oxide ore according to the first aspect, in which the nickel-containing oxide ore has an iron grade of 5% by mass or more and 30% by mass or less.
(3) A third aspect of the present invention relates to the method for smelting a nickel-containing oxide ore according to the first or second aspect, further including pelletizing the raw material which contains the nickel-containing oxide ore, in which the pelletized raw material is subjected to the reduction treatment.
(4) A fourth aspect of the present invention relates to the method for smelting a nickel-containing oxide ore according to any one of the first to third aspects, further including heat-treating the raw material which contains the nickel-containing oxide ore at a temperature of 300C or higher and 1,200C or lower, in which the nickel-containing oxide ore, which is a heat-treated product obtained by the heat treatment, is subjected to the reduction treatment.
(5) A fifth aspect of the present invention relates to the method for smelting a nickel-containing oxide ore according to any one of the first to fourth aspects, in which a melting treatment product which contains the reduced product produced in the melting treatment has a MgO/SiO2 mass ratio of 0.5 or more and 0.7 or less.
(6) A sixth aspect of the present invention relates to a method for smelting a nickel-containing oxide ore, the method including: supplying a gas containing hydrogen as a reducing agent to a raw material which contains the nickel-containing oxide ore in a proportion which satisfies a relationship H2/(H2+H2O+CO2+O2) 0.9 to perform a reduction treatment; subjecting the reduced product obtained by the reduction treatment to a melting treatment; and separating slag from the molten product obtained by the melting treatment, and recovering metal containing nickel.
(7) A seventh aspect of the present invention relates to the method for smelting a nickel-containing oxide ore according to the sixth aspect, in which the temperature of the gas is 600C or higher.
(8) An eighth aspect of the present invention relates to the method for smelting a nickel-containing oxide ore according to the seventh aspect, in which the temperature of the gas is adjusted to 600C or higher by electrically heating the gas.
(9) A ninth aspect of the present invention relates to the method for smelting a nickel-containing oxide ore according to any one of the sixth to eighth aspects, in which in the reduction treatment, the gas is supplied from below to the raw material which contains the nickel-containing oxide ore.
(10) A tenth aspect of the present invention relates to the method for smelting a nickel-containing oxide ore according to the ninth aspect, in which in the reduction treatment, the raw material which contains the nickel-containing oxide ore is supplied downward from the top.
(11) A eleventh aspect of the present invention relates to the method for smelting a nickel-containing oxide ore according to any one of the sixth to tenth aspects, in which the nickel-containing oxide ore has an iron grade of 5% by mass or more and 30% by mass or less.
(12) A twelfth aspect of the present invention relates to the method for smelting a nickel-containing oxide ore according to any one of the sixth to eleventh aspects, further including pelletizing the raw material which contains the nickel-containing oxide ore, in which the pelletized raw material is subjected to the reduction treatment.
(13) A thirteenth aspect of the present invention relates to the method for smelting a nickel-containing oxide ore according to any one of the sixth to twelfth aspects, further including heat-treating the raw material which contains the nickel-containing oxide ore at a temperature of 300C or higher and 1,200C or lower, in which the nickel-containing oxide ore, which is a heat-treated product obtained by the heat treatment, is subjected to the reduction treatment.
(14) A fourteenth aspect of the present invention relates to the method for smelting a nickel-containing oxide ore according to any one of the sixth to thirteenth aspects, in which a melting treatment product which contains the reduced product produced in the melting treatment has a MgO/SiO2 mass ratio of 0.5 or more and 0.7 or less.

### Effects of the Invention

According to the present invention, it is possible to provide a method for smelting a nickel-containing oxide ore having a reduced CO2 generation amount and a high nickel recovery ratio.

### BRIEF DESCRIPTION OF THE DRAWINGS

FIG. 1 is a process diagram showing an example of a flow of a smelting method of a nickel-containing oxide ore;
FIG. 2 is a STEM photograph of a cross-section of a sample after a hydrogen reduction treatment (before a melting treatment);
FIG. 3 is a schematic diagram of a tubular reduction reaction vessel for explaining the charging direction of a raw material which contains a nickel-containing oxide ore and the method for supplying a gas containing hydrogen;
FIG. 4 is a STEM photograph of a cross-section of a sample (including a portion where no metal particles are visible) after a hydrogen reduction treatment (before a melting treatment);
FIG. 5 is a schematic diagram of a test device used in Examples; and
FIG. 6 is a photograph of a sample recovered in Examples.

### PREFERRED MODE FOR CARRYING OUT THE INVENTION

Hereinafter, specific embodiments of the present invention (hereinafter also referred to as embodiments) will be described in detail. It should be noted that the present invention is not limited to the following embodiments at all, and can be carried out with appropriate modifications without departing from the gist of the present invention.

The method according to the present embodiment is a smelting method for separating and recovering nickel from an oxide ore containing nickel (nickel-containing oxide ore).

A nickel-containing oxide ore as a raw material is not particularly limited, and examples thereof include a saprolite, a limonite ore and the like. The nickel-containing oxide ore contains nickel oxide (NiO) and iron oxide (Fe2O3) as constituent components.

The nickel-containing oxide ore preferably has an iron grade of 5% by mass or more and 30% by mass or less. When the iron grade is less than 5% by mass, there is a possibility that an amount of iron to be reduced in the treatment of hydrogen reduction in a hydrogen reduction step S3 mentioned below decreases, which decreases an amount of metal iron contributing as the reducing agent in the melting treatment in a melting step S4, which does not improve the nickel reduction ratio, resulting in a decrease in the nickel recovery ratio. When the iron grade exceeds 30% by mass, there is a possibility that the nickel grade of metal nickel (alloy) to be recovered decreases and an amount of slag increases.

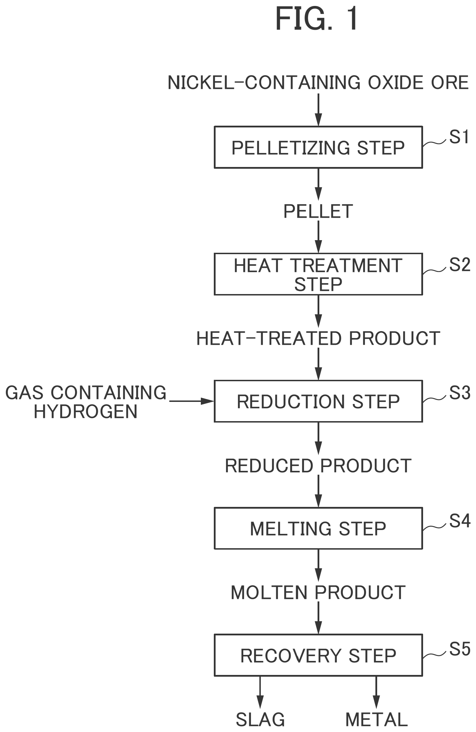

Specifically, FIG. 1 is a process diagram showing an example of a flow of the method for smelting a nickel-containing oxide ore according to the present embodiment (hereinafter also merely referred to as smelting method). The feature of this method is including a reduction step S3 of performing a reduction treatment while supplying a gas containing a specific proportion of hydrogen as a reducing agent to a raw material which contains the nickel-containing oxide ore, a melting step S4 of melting a reduced product obtained by the reduction treatment, and a recovery step S5 of separating a slag from the molten product obtained by the melting treatment and recovering a metal which contains nickel.

A step of pelletizing the raw material which contains the nickel-containing oxide ore (pelletizing step S1) may be further provided, and the pelletized raw material may be subjected to a reduction treatment.

A step of heat treating the raw material which contains the nickel-containing oxide ore or the pelletized raw material if the raw material is pelletized in the pelletizing step S1, at a specific temperature (heat treatment step S2) may be further provided, and the nickel-containing oxide ore, which is the heat-treated product after the heat treatment, may be subjected to a reduction treatment.

In this way, the smelting method according to the present embodiment includes subjecting a raw material which contains the nickel-containing oxide ore to a reduction treatment using a gas containing hydrogen as a reducing agent (hydrogen reduction treatment) and then subjecting the resulting reduced product to a melting treatment. This allows the nickel contained in the nickel-containing oxide ore to be effectively reduced, and metal containing nickel to be recovered at a high recovery ratio.

In particular, in the smelting method according to the present embodiment, a tubular reaction vessel (reduction reaction vessel) is used in the reduction step S3, and a raw material which contains the nickel-containing oxide ore is charged into the tubular reaction vessel such that the raw material moves from top to bottom, and supplying a gas containing hydrogen to the raw material from below and from the lateral side to perform a reduction treatment. The gas supplied from below to the raw material is supplied at room temperature, and the gas supplied to the raw material from the lateral side is adjusted to a temperature of 300C or higher and is supplied from the lateral side at a position above the position where the raw material that has completed the reduction treatment is stored.

By performing the hydrogen reduction treatment in this manner, it is possible to suppress insufficient reduction and prevent oxidation (reoxidation) of metal nickel and metal iron produced by reduction, thereby enabling recovery of nickel-containing metals at an even higher recovery ratio.

### [Pelletizing Step]

Although not an essential embodiment in the method according to the present embodiment, a step of pelletizing a raw material which contains the nickel-containing oxide ore (pelletizing step S1) may be provided in the smelting method according to the present embodiment. By pelletizing a raw material which contains the nickel-containing oxide ore and supplying a gas containing hydrogen to the pelletized raw material (raw material pellets) to perform a reduction treatment, it is possible to suppress a proportion of carryover of the raw material together with unreacted hydrogen or together with an exhaust gas which contains water vapor after reaction.

The method of pelletizing the raw material is not particularly limited. For example, pellets can be obtained by forming a powder of nickel oxide ore as a raw material, adding moisture necessary for pelletization to the powder of the ore, and molding the powder into pellets having a predetermined size and shape by a known pellet manufacturing apparatus such as a tumbling granulator, a compression molding machine, or an extrusion molding machine. Alternatively, pellets may be formed by hand of an operator.

The shape of pellets is not particularly limited, but may be, for example, a spherical shape.

The size of a pellet is not particularly limited, but is preferably a size, for example, which allows the pellet (diameter in the case of a spherical pellet) to be charged into a reduction reaction vessel or the like in the reduction step S3, such as about 5 mm or more and 50 mm or less. The size of a pellet is more preferably 8 mm or more and 40 mm or less, and still more preferably 10 mm or more and 35 mm or less. When a reaction vessel for the reduction treatment is filled with pellets with the size of less than 5 mm, gaps between the pellets decrease due to too small diameter of the pellets or breakage of the pellets having a small diameter, which may hinder the passage of a gas containing hydrogen as the reducing agent in some cases. In such a case, when the pressure of the supplied gas exceeds a certain value, the raw material is pushed up at once, and a phenomenon in which most of the gas escapes without reacting easily occurs. On the other hand, when the size of pellets exceeds 50 mm, a contact area between the pellet and the gas becomes small, so that the reduction reaction takes time, being incapable of achieving an efficient treatment.

Note that after the raw material which contains the nickel-containing oxide ore is formed into pellets, the pellets are preferably dried. In the pelletization of the raw material, when moisture necessary for the pelletization is added, the raw material is in a sticky state due to the added moisture. Therefore, the moisture attached to the pellets can be removed by performing a drying treatment on the pellets from a viewpoint of easy handling thereafter. The drying treatment method is not particularly limited, and for example, a hot air at 300C to 400C can be blown against the pellets.

### [Heat Treatment Step]

Although not an essential embodiment, the smelting method according to the present embodiment may be provided with a heat treatment step S2 in which a raw material which contains the nickel-containing oxide ore, or the pelletized raw material (raw material pellets) if a pelletizing step S1 is provided, is heat-treated at a specific temperature.

Specifically, in the heat treatment step S2, the raw material pellets which contain the nickel-containing oxide ore are heat-treated by raising the temperature to 300C or higher and 1,200C or lower. The heat treatment is a pre-treatment performed before a subsequent hydrogen reduction treatment step (reduction step S3) and a step of further melting the reduced product (melting step S4). In this way, crystal water contained in the nickel-containing oxide ore can be removed by performing the heat treatment on the nickel-containing oxide ore.

The heat treatment is performed under the temperature condition of 300C or higher and 1,200C or lower as mentioned above. When the heat treatment temperature exceeds 1,200C, a fayalite slag may be generated before metal iron contained in the nickel-containing oxide ore is generated during the hydrogen reduction treatment in the next reduction step S3. If a fayalite slag is generated, an amount of metal iron contributing as a reducing agent in the melting step S4 may decrease, and the nickel reduction ratio may not be improved. On the other hand, when the heat treatment temperature is lower than 300C, the reduction reaction in the hydrogen reduction step S3 or removal of crystal water contained in the nickel-containing oxide ore may be hindered, resulting in a decrease in the nickel reduction ratio.

The heat treatment temperature is more preferably set at a range of 400C or higher and 1,000C or lower. Preferably, by subjecting to the heat treatment in such a temperature range, most of the crystal water contained in the nickel-containing oxide ore can be effectively removed, and an increase in energy cost can be suppressed.

### [Reduction Step]

The smelting method according to the present embodiment includes a reduction step S3 in which a reduction treatment (hydrogen reduction treatment) is carried out while supplying a gas containing a specific proportion of hydrogen as a reducing agent to a raw material which contains the nickel-containing oxide ore.

When the above-mentioned heat treatment step S2 is provided to heat-treat a nickel-containing oxide ore as the raw material, the resulting heat-treated product is subjected to the hydrogen reduction treatment. The term raw material which contains a nickel-containing oxide ore means raw material pellets when the pelletizing step S1 is provided.

In this way, by subjecting the raw material which contains the nickel-containing oxide ore to the hydrogen reduction treatment, nickel in the nickel-containing oxide ore is reduced to metal, as well as almost all or all of iron which is present as a trivalent oxide is reduced to a divalent oxide, and some of the divalent iron oxide is further reduced to metal.

The reduction treatment using a gas containing hydrogen as a reducing agent (hydrogen reduction treatment) becomes a treatment using a carbon neutral reducing agent, which can effectively decrease a CO2 generation amount as compared with a conventional technique. The term carbon neutral reducing agent means a reducing agent which contains almost no carbon component and contributes to reducing greenhouse gas emissions. Specifically, for example, a gas containing hydrogen at a proportion indicated by a relationship H2/(H2+H2O+CO2+O2)< 0.9 is a carbon neutral reducing agent.

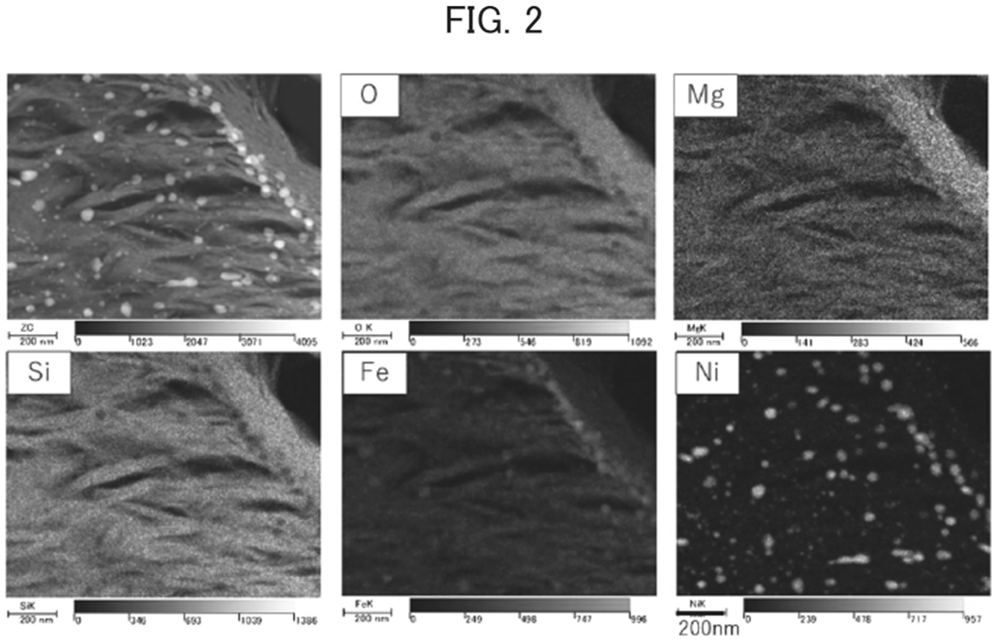

As mentioned above, the hydrogen reduction treatment of the nickel-containing oxide ore yields a lower reduction ratio to metal nickel compared to the Elkem method. However, as shown in the STEM photograph of the sample cross-section after the hydrogen reduction treatment (before the melting treatment mentioned later) in FIG. 2, the hydrogen reduction treatment enables the formation of metal nickel and iron particles, which are fine and not numerous. As will be mentioned in detail later, by subjecting the reduced material obtained from hydrogen reduction to a melting treatment, the generated fine metal particles (metal microparticles) can settle, agglomerate, and be recovered. At this stage, it is desirable to effectively utilize the metal nickel and iron particles generated by the hydrogen reduction treatment during the melting treatment.

Thus, in the method according to the present embodiment, a tubular reaction vessel (reduction reaction vessel) is used in the reduction step S3, and a raw material containing a nickel-containing oxide ore is charged into the tubular reaction vessel such that the raw material moves from top to bottom in the tubular reaction vessel, and a gas containing hydrogen as a reducing agent is supplied to the raw material from below and from the lateral side to perform a reduction treatment. The gas supplied from below to the raw material is supplied at room temperature, and the gas supplied from the lateral side to the raw material is supplied at a gas temperature of 300C or higher from the lateral side at a position above the position where the raw material that has completed the reduction treatment is stored.

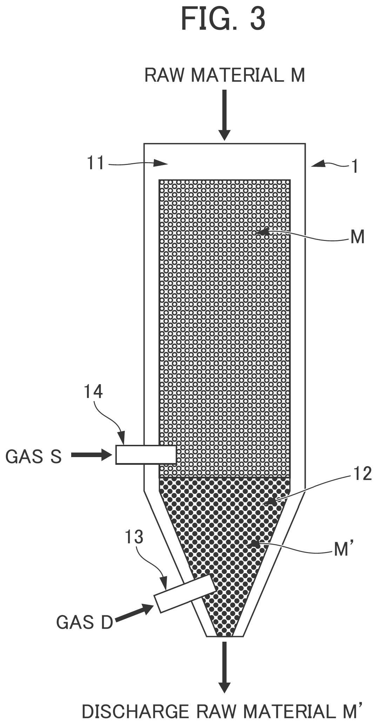

FIG. 3 is a schematic diagram of a tubular reduction reaction vessel for explaining the charging direction of a raw material which contains the nickel-containing oxide ore and the method for supplying a gas containing hydrogen.

In the reduction treatment, a raw material containing a nickel-containing oxide ore (hereinafter also referred to as raw material M, which mainly indicates a raw material that has not undergone reduction reaction) is charged into a tubular reduction reaction vessel 1 from the top of the vessel 1 (a position near the position indicated by reference numeral 11 in FIG. 3), and the reduction reaction progresses as the raw material M moves successively from above downward. The raw material that has completed the reduction treatment (hereinafter, the raw material that has completed the reduction treatment is also referred to as raw material M) is stored at a position below the reduction reaction vessel 1 (a position near the position indicated by reference numeral 12 in FIG. 3).

Meanwhile, in the tubular reduction reaction vessel 1, a gas containing hydrogen is supplied to the raw material from below (near the position indicated by reference numeral 13 in FIG. 3). The gas containing hydrogen (hereinafter also referred to as gas D) supplied from below is at room temperature. Therefore, the gas D supplied to the raw material from below is introduced into the reduction reaction vessel 1 from below at room temperature, and then comes into contact with the raw material M (the raw material stored at the position indicated by reference numeral 12 in FIG. 3) immediately after the reduction treatment is completed, and rises while being cooled. The gas D supplied from below has a temperature of approximately 300C or higher immediately after passing through the raw material M that has completed the reduction treatment, and as it rises further upward, it reduces the raw material M (a new raw material that has not completed the reduction treatment), and is then discharged as exhaust gas from the top of the reduction reaction vessel 1. In this way, by supplying room temperature gas D to the raw material from below, the raw material M that has completed the reduction treatment can be maintained in a reducing atmosphere and cooled, thus making it possible to suppress oxidation (reoxidation) of the raw material M that has completed the reduction treatment.

In the tubular reduction reaction vessel 1, a gas containing hydrogen is also supplied from the lateral side (position 14 in FIG. 3) above the position (position 12 in FIG. 3) where the raw material M that has completed the reduction treatment is stored. The gas containing hydrogen (hereinafter also referred to as gas S) supplied from the lateral side has a gas temperature of 300C or higher. This gas S is used for the reduction treatment of the unreacted raw material M. Since the reduction reaction using hydrogen is an endothermic reaction, by using a gas (gas S) containing hydrogen adjusted to a temperature of 300C or higher, the temperature of the raw material M can be raised, and the reduction reaction can proceed efficiently. Therefore, in order to prevent the production of insufficiently reduced raw material, it is preferable to introduce the hydrogen-containing gas S heated to a temperature of 300C or higher from a position as close as possible to the lateral side (position 14 in FIG. 3) above the position of the raw material M that has completed the reduction treatment stored below the tubular reduction reaction vessel 1 (position 12 in FIG. 3). Since the gas S is supplied from the lateral side (position 14 in FIG. 3) above the position where the raw material M that has completed the reduction treatment is stored, the gas hardly comes into contact with the raw material M that has completed the reduction treatment, and therefore does not interfere with cooling.

With regard to the hydrogen content in the gas, if the gas contains hydrogen at a proportion which satisfies a relationship H2/(H2+H2O+CO2+O2) < 0.9, components such as H2O, CO2 and O2 may act as oxidizing agents, which may prevent the reduction from proceeding sufficiently and may oxidize (reoxidize) the metal nickel particles and metal iron particles produced by hydrogen reduction, as mentioned above. For this reason, regarding a gas containing hydrogen as a reducing agent, it is preferable to perform the hydrogen reduction treatment using the gas containing hydrogen in a proportion which satisfies a relationship H2/(H2+H2O+CO2+O2) 0.9.

The temperature of the gas S supplied from the lateral side is preferably at or above a certain temperature. Specifically, the gas temperature is preferably 600C or higher, more preferably 700C or higher, and still more preferably 800C or higher. Preferably, by supplying the hydrogen-containing gas S at such a gas temperature, the reduction reaction of the raw material can proceed more smoothly.

As a means for heating the gas to be supplied, an electric heater or the like can be used. In such way, by electrically heating the gas, the temperature of the gas can be adjusted to a temperature of, for example, 300C or higher. Alternatively, the gas may be heated using a heat exchanger such as a heat exchange heater. When the gas is heated using burner combustion gas as a heat source, H2O and CO2 contained in the combustion gas act as oxidizing agents in the furnace, reoxidizing the generated metal nickel particles and metal iron particles, which may reduce the nickel recovery ratio.

As mentioned above, by carrying out a hydrogen reduction treatment by supplying a gas containing hydrogen as a reducing agent to the raw material containing a nickel-containing oxide ore from below at room temperature (Gas D) and from the lateral side at a gas temperature of 300C or higher (Gas S), it is possible to prevent insufficient reduction and to prevent oxidation (reoxidation) of the nickel and iron metals produced by reduction. In other words, it is possible to prevent the metal nickel particles and metal iron particles in the reduction product produced by the hydrogen reduction treatment from being reoxidized. The metal nickel particles act as nuclei for settling and agglomeration in the subsequent melting treatment, and preventing the reoxidation of these metal nickel particles makes it possible to recover metal nickel at a high recovery ratio through the melting treatment. The iron metal particles serve as a reducing agent in the subsequent melting treatment (details will be mentioned later), and by preventing the reoxidation of the metal iron particles, the reduction of nickel during the melting treatment is promoted, resulting in an improved recovery ratio of metal nickel.

By supplying a gas containing hydrogen from below and from the lateral side to the raw material which contains the nickel-containing oxide ore to perform a reduction treatment, the generated exhaust gas can be guided upward. As a result, a supply gas having a high hydrogen concentration can be introduced into a site where the concentration of nickel oxide is low, and a supply gas having a low hydrogen concentration can be introduced into a site where the concentration of nickel oxide is high, so that the reduction reaction can proceed efficiently.

By setting the temperature of a gas S supplied from the lateral side to the raw material which contains the nickel-containing oxide ore at 300C or higher, preferably, for example, 600C or higher, a rising gas flow is efficiently generated, thus making it possible to form a smoother gas flow. As a result, a supplied gas or an exhaust gas can efficiently flow, and the hydrogen reduction reaction can more efficiently proceed.

As mentioned above, since the raw material M which contains a nickel-containing oxide ore is charged into the tubular reduction reaction vessel 1 such that the raw material moves from top to bottom, that is, the raw material is charged in the opposite direction to the supply direction of a gas containing hydrogen, the raw material can be brought into contact with the gas containing hydrogen in a countercurrent manner, whereby the reduction reaction proceeds more efficiently. That is, by supplying a gas containing hydrogen from below to the raw material supplied downward from the top to guide an exhaust gas upward, it is possible to introduce a supplied gas having a high hydrogen concentration into a site where the concentration of nickel oxide is low, and it is possible to introduce a supplied gas having a low hydrogen concentration into a site where the concentration of nickel oxide is high.

An amount of hydrogen to be supplied in the hydrogen reduction treatment is preferably 1.2 times or more an amount of hydrogen necessary for reducing iron and nickel to be reduced in the nickel-containing oxide ore.If the amount of hydrogen to be supplied is less than 1.2 times the necessary amount of hydrogen mentioned above, reduction may be insufficient. The upper limit of the amount of hydrogen to be supplied is not particularly limited, and may be set as appropriate in consideration of a supply cost of hydrogen, the form of contact between the raw material and hydrogen in the reduction reaction vessel (that is, reaction efficiency), and the like.

As mentioned above, the reduction reaction vessel to be used in the hydrogen reduction treatment is not particularly limited. For example, a vertical shaft furnace or the like can be used.

As mentioned above, in the hydrogen reduction treatment for nickel-containing oxide ores, the reduction ratio to metal nickel is generally lower than that in the conventional Elchem method. In this regard, as will be described below, in the method according to the present embodiment, the hydrogen reduction treatment is performed on the raw material which contains the nickel-containing oxide ore and then the melting treatment (melting step S4) is performed on the resulting reduced product. As a result, it is possible to improve the nickel reduction ratio.

### [Melting Step]

In the melting step S4, the reduced product obtained by the hydrogen reduction treatment is charged into, for example, an electric furnace or the like to be melted. In such way, by subjecting the resulting reduced product (hydrogen reduced product) to the melting treatment, the recovery ratio of nickel can be improved. It is also possible to improve the reduction ratio of nickel.

Nickel is more likely to be reduced than iron. Therefore, it is presumed that by subjecting the hydrogen reduced product to the melting treatment, the nickel oxide remaining unreacted even after the hydrogen reduction treatment, and the reduced metal iron and divalent iron oxide come into contact with each other, and the oxygen substitution reaction as shown in the following formulas [1] and [2] occurs, and the nickel oxide is reduced to metal nickel. That is, metal iron or divalent iron oxide, which is a reduced product of iron, can effectively act as a reducing agent and can reduce nickel oxide.

Fe + NiO Ni + FeO Formula [1]

2FeO + NiO Ni + Fe2O3 Formula [2]

That is, it is believed that since a sample after the hydrogen reduction is in a solid state, the reaction of the above formulas [1] and [2] is very difficult to proceed, however, the metal in the slag comes to easily move upon melting the hydrogen reduced product, thus promoting the reaction of the formulas [1] and [2]. As a result, a nickel metallization ratio is increased, and a nickel recovery ratio to be recovered through the treatment in the melting step S4 can be improved.

Melting the hydrogen reduction product can promote the settling and aggregation of metal nickel particles, which are very fine and therefore difficult to recover by physical separation such as magnetic separation, and this can also improve the recovery ratio of nickel.

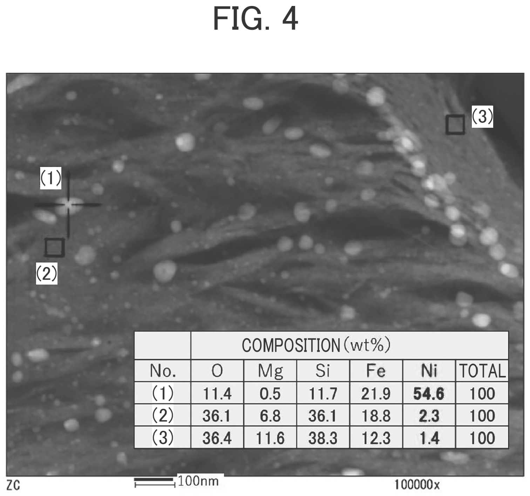

FIG. 4 is a STEM photograph (along with the results of elemental analysis (EDX analysis)) of a cross-section of a sample after hydrogen reduction treatment (before a melting treatment) including a portion where no metal particles are visible. As shown in FIG. 4, even in the areas where no metal particles were observed (areas (2) and (3) in the figure), about 1 to 2% of nickel was detected. These results also suggest that a high nickel recovery ratio cannot be achieved simply by settling the metal components produced by hydrogen reduction treatment, and that some of the nickel in the raw material is reduced from nickel oxide by iron metal or divalent iron oxide based on the reactions of the above formulas [1] and [2].

In the melting treatment, the temperature condition is not particularly limited as long as the hydrogen reduced product can be melted, but is preferably 1,400C or higher and 1,600C or lower, for example. When the melting temperature is set at 1,400C or higher, a slag having good properties can be obtained, and the slag and the metal can be efficiently separated from each other. By setting the melting temperature at 1,600C or lower, it is possible to suppress damage/wear and energy cost of refractories which constitute the melting furnace.

Here, as mentioned above, the nickel-containing oxide ore as the raw material to be used in the method according to the present embodiment preferably has an iron grade of 5% by mass or more and 30% by mass or less. When the iron grade is less than 5% by mass, an amount of iron to be reduced during the reduction in the reduction step S3 decreases, which decreases an amount of metal iron contributing as the reducing agent during melting in the melting step S4, resulting in a possibility that the nickel recovery ratio decreases.

In the melting treatment, the melting treatment product which contains the reduced product to be melted preferably has a MgO/SiO2 mass ratio of 0.5 or more and 0.7 or less. The MgO/SiO2 mass ratio of less than 0.5 or more than 0.7 may increase the melting point of slag.

It is preferable to prepare a raw material to be treated and subject the raw material to the melting treatment so that the MgO/SiO2 mass ratio in the melting treatment is included in the above-mentioned range. In the melting treatment, a flux such as SiO2 may be added. In that case, an amount of flux to be added should be decided by considering that the MgO/SiO2 mass ratio in the melting treatment product is to be included in the above-mentioned range. Note that a flux can lower the melting temperature of slag, whereby sedimentation of the metal (metal nickel) in the slag is promoted.

### [Recovery Step]

In the recovery step S5, a slag is separated from the molten product obtained by the melting treatment, and the metal (alloy) containing nickel is recovered. For example, in a molten product obtained by melting a reduced product in an electric furnace or the like, a slag and a metal are separated (specific gravity separation) into an upper layer and a lower layer, respectively, by specific gravities. The metal containing nickel separated from the slag can be efficiently recovered by performing an operation such as tapping from a metal hole provided in a side wall of the furnace.

All or a plurality of steps of the heat treatment step S2, the reduction step S3, the melting step S4, and the recovery step S5 mentioned above can be carried out by using one furnace and compartmentalizing the furnace into different zones. Alternatively, they may be performed in a batch mode. For example, a shaft furnace or a blast furnace is used, and the furnace is compartmentalized into zones where each treatment of the heat treatment step S2, the reduction step S3, the melting step S4, and the recovery step S5 is performed in this order from the upper layer so that, finally, the slag and the metal separate according to the specific gravities in the portion of the furnace bottom where a molten product can be stored.

### EXAMPLES

Hereinafter, Examples of the present invention will be described in more detail, but the present invention is not limited to the following Examples.

### [Example 1]

Nickel-containing oxide ore (saprolite ore) having the composition shown in Table 1 below was used as the raw material, and water was added to the raw material powder, which was then formed into spherical pellets with a diameter of 10 mm.

**[Table 1]**

| (% by mass) | Ni | Fe | Co | MgO | SiO₂ | S | Al₂O₃ |
|---|---|---|---|---|---|---|---|
| Nickel-containing oxide ore | 1.8 | 15 | 0.06 | 24 | 35 | 0.02 | 1.5 |

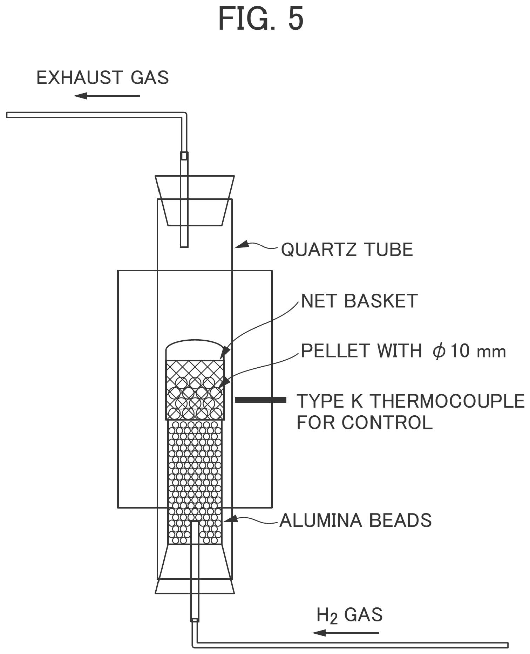

Using a test device shown in the schematic diagram of FIG. 5, the resulting pellets (raw material pellets) were subjected to a hydrogen reduction treatment.

Specifically, the raw material pellets were charged in a net basket and, after temperature rising to 800C in nitrogen, the raw material pellets were held for 120 minutes while allowing a hydrogen gas having a concentration of 100% (a gas that satisfies a relationship H2/(H2+H2O+CO2+O2) = 1.0, gas temperature: 800C) from below to the raw material pellets in the net basket to perform a reduction treatment (hydrogen reduction treatment).

After the hydrogen reduction treatment, the power to the furnace was turned off, and the resulting reduced product sample was cooled to below 300C while supplying a hydrogen gas having a concentration of 100% (gas temperature: room temperature) to the furnace, and then recovered.

An amount of hydrogen supplied was set at a large excess amount of 10 times or more an amount necessary for reducing nickel and iron in the nickel-containing oxide ore.

The recovered reduced product sample was charged into an alumina crucible together with a small amount of flux (SiO2) and heated to 1,600C in a nitrogen atmosphere to melt the reduced product sample.

The mixture was held for 60 minutes to perform the melting treatment, and then cooled to recover a generated slag and a metal formed in a button shape.

Note that SiO2 as a flux was added to decrease the melting temperature of the slag to promote sedimentation of the metal (metal nickel) in the slag.

The amount of flux to be added was set at an amount, with which the MgO/SiO2 mass ratio in the sample to be melted containing the reduced product was 0.6.

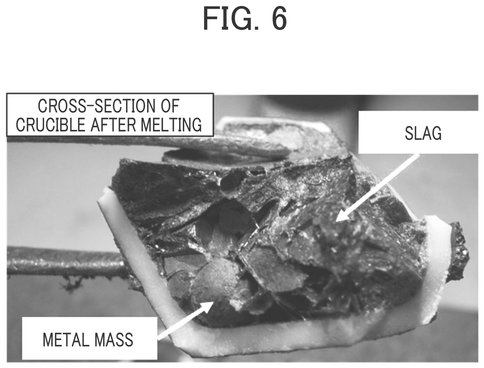

FIG. 6 is a photograph showing a state of the sample recovered after the melting treatment.

As shown in the photograph of FIG. 6, the slag was melted, and no metal was visually observed in the slag.

It can be seen that the metal was obtained as a mass in the form of a button shape.

Table 2 below shows the weight of the resulting metal and the results of the metallization ratio calculated from chemical analysis by ICP.

As shown in Table 2, the resulting nickel had a high nickel metallization ratio of 95% or more.

It should be noted that the metallization ratio is represented by a percentage of a mass of the recovered metal nickel (or metal iron) with respect to a mass of nickel (or iron) contained in the nickel-containing oxide ore as a raw material.

**[Table 2]**

| | Metallization ratio(%) | |
|---|---|---|
| | Ni | Fe |
| Sample after hydrogen reduction + melting treatment | 99.5 | 45 |

Table 3 below shows the metallization ratio calculated by chemical analysis of the reduced product sample after the hydrogen reduction treatment (before the melting treatment) using the bromethanol method.

As shown in Table 2 above, the nickel metallization ratio and the iron metallization ratio were significantly increased as compared with the results shown in Table 3 below.

It is possible that the reason why the metallization ratio increased despite not adding a reducing agent during the melting treatment is that during chemical analysis, trace nickel and iron metal components were incorporated into the silicate, preventing the bromomethane solution from contacting the metal and thus failing to dissolve it.

STEM observation of the sample cross-section after the hydrogen reduction treatment (before the melting treatment) confirmed the incorporation of trace metal nickel and iron particles within the silicate, as shown in the photograph in FIG. 2.

As a result, it is considered that performing the melting treatment after the hydrogen reduction treatment allowed the fine metal particles generated by hydrogen reduction to settle and agglomerate, thereby enabling their recovery.

The matrix of the sample shown in the photograph in FIG. 2 is considered to be an MgO-SiO2-FeO-based slag.

Analysis of areas where metal particles were not observed in the samples after the hydrogen reduction treatment (before the melting treatment) (areas (2) and (3) in FIG. 4) detected approximately 1 to 2% nickel, as shown in the photograph in FIG. 4.

Therefore, it is considered that the Ni metallization ratio shown in Table 2 above cannot be achieved solely by the precipitation of the above-mentioned metal components.

As a result, it is considered that nickel oxide of some nickel is reduced by metal iron or divalent iron oxide through reactions such as those mentioned in the formulas [1] and [2].

**[Table 3]**

| | Metallization ratio(%) | |
|---|---|---|
| | Ni | Fe |
| Sample after hydrogen reduction | 3 | 8.4 |

As can be seen from the results shown in Tables 2 and 3, in the recovery of nickel from the nickel-containing oxide ore, it was confirmed that, by pelletizing a raw material which contains the nickel-containing oxide ore, and subjecting the raw material pellets to a hydrogen reduction treatment, followed by subjecting to a melting treatment, a high nickel recovery ratio, for example, 95% or more, could be achieved even by the hydrogen reduction treatment, that is, by the reduction with a carbon neutral reducing agent.

### [Comparative Example 1]

In Comparative Example 1, the raw material which contains the nickel-containing oxide ore was pelletized and the raw material pellets were subjected to hydrogen reduction at a temperature of 800C in the same manner as in Example 1.

Thereafter, the resulting reduced product sample was pulverized by a vibration mill, and the metal content was analyzed by a bromine methanol method.

That is, in Comparative Example 1, the melting treatment was not performed after the hydrogen reduction.

As a result, as shown in Table 3 above, the nickel metallization ratio was about 3%.

It should be noted that even if all of the metal had been recovered, the method of Comparative Example 1 would have been industrially unfeasible.

## Claims

1. A method for smelting a nickel-containing oxide ore, the method comprising:
using a tubular reaction vessel, charging a raw material which contains the nickel-containing oxide ore into the reaction vessel such that the raw material moves from top to bottom, and supplying a gas containing hydrogen as a reducing agent to the raw material from below and from lateral side to perform a reduction treatment;
subjecting a reduced product obtained by the reduction treatment to a melting treatment; and
separating a slag from a molten product obtained by the melting treatment and recovering a metal which contains nickel, wherein
the gas supplied to the raw material from below is supplied at room temperature, and
the gas supplied to the raw material from the lateral side has a temperature of 300C or higher and is supplied from the lateral side at a position above the position where the raw material that has completed the reduction treatment is stored.

2. The method for smelting a nickel-containing oxide according to claim 1, wherein the nickel-containing oxide ore has an iron grade of 5% by mass or more and 30% by mass or less.

3. The method for smelting nickel-containing oxide ore according to claim 1 or 2, further comprising: pelletizing the raw material which contains the nickel-containing oxide ore, wherein
the pelletized raw material is subjected to the reduction treatment.

4. The method for smelting nickel-containing oxide ore according to any one of claims 1 to 3, further comprising: heat-treating the raw material which contains a nickel-containing oxide ore at a temperature of 300C or higher and 1,200C or lower, wherein
the nickel-containing oxide ore, which is a heat-treated product obtained by the heat treatment, is subjected to the reduction treatment.

5. The method for smelting a nickel-containing oxide ore according to any one of claims 1 to 4, wherein a melting treatment product which contains the reduced product produced in the melting treatment has a MgO/SiO2 mass ratio of 0.5 or more and 0.7 or less.

6. A method for smelting a nickel-containing oxide ore, the method comprising:
supplying a gas containing hydrogen as a reducing agent to a raw material which contains the nickel-containing oxide ore in a proportion which satisfies a relationship H2/(H2+H2O+CO2+O2) 0.9 to perform a reduction treatment;
subjecting the reduced product obtained by the reduction treatment to a melting treatment; and
separating a slag from the molten product obtained by the melting treatment, and recovering metal containing nickel.

7. The method for smelting a nickel-containing oxide ore according to claim 6, wherein the temperature of the gas is 600C or higher.

8. The method for smelting a nickel-containing ore according to claim 7, wherein the temperature of the gas is adjusted to 600C or higher by electrically heating the gas.

9. The method for smelting a nickel-containing oxide ore according to any one of claims 6 to 8, wherein in the reduction treatment, the gas is supplied from below to the raw material which contains the nickel-containing oxide ore.

10. The method for smelting a nickel-containing oxide ore according to claim 9, wherein in the reduction treatment, the raw material which contains the nickel-containing oxide ore is supplied downward from the top.

11. The method for smelting a nickel-containing oxide according to any one of claims 6 to 10, wherein the nickel-containing oxide ore has an iron grade of 5% by mass or more and 30% by mass or less.

12. The method for smelting nickel-containing oxide ore according to any one of claims 6 to 11, further comprising pelletizing the raw material which contains the nickel-containing oxide ore, wherein
the pelletized raw material is subjected to the reduction treatment.

13. The method for smelting nickel-containing oxide ore according to any one of claims 6 to 12, further comprising heat-treating the raw material which contains the nickel-containing oxide ore at a temperature of 300C or higher and 1,200C or lower, wherein
the nickel-containing oxide ore, which is a heat-treated product obtained by the heat treatment, is subjected to the reduction treatment.

14. The method for smelting a nickel-containing oxide ore according to any one of claims 6 to 13, wherein a melting treatment product which contains the reduced product produced in the melting treatment has a MgO/SiO2 mass ratio of 0.5 or more and 0.7 or less.
